# EUROPEAN PATENT APPLICATION

(11) **EP 2 495 533 A2**
(43) Date of publication of application: **05.09.2012**
(21) Application number: 12168726.3
(22) Date of filing: 03.07.2008
(51) Int. Cl.: G01C 21/36

(54) **Remote entry navigation system**

(30) Priority: 11.07.2007 US 776057
(62) Divisional of application: 08012057.9
(71) Applicant: QNX Software Systems Limited, Kanata, Ontario K2K 0B3 (CA)
(72) Inventor: Poliak, Anthony Andrew, Lake Stevens, WA 98258 (US)
(74) Representative: Roberts, Gwilym Vaughan

(57) **Abstract**

A remote entry navigation system streamlines a navigation process by generating routing directions to a destination transmitted by a mobile position identification unit. A remote entry navigation system includes a receiver that receives location data representing a desired location from a remote mobile position identification unit. An in-vehicle memory retains the location data. A vehicle processor generates routing directions to the desired location based on at least two elements included within the location data.

## Description

### BACKGROUND OF THE INVENTION

### 1. Technical Field.

This application relates to a navigation system, and more particularly, to a navigation system that generates directions to a destination based on remotely transmitted data.

### 2. Related Art.

Vehicle navigation systems provide directions to a user between a starting point and a destination. In some systems a user enters the name or address of a destination before directions may be generated.

Occasionally, the user may not know the name, address, or other identifying information of the destination. In certain areas of the world, people refer to roads not by their formal names, but by local references. If the system does not recognize these local references, it cannot provide the user with directions. Alternatively, some areas do not use numerical addresses, but instead refer to buildings by the order in which they are constructed. In this instance, a system may also provide inaccurate directions. In yet other instances, buildings constructed after the navigation system has been configured may not be identifiable by the system. Therefore, there is a need for an improved navigation system.

### SUMMARY

A remote entry navigation system streamlines a navigation process by generating routing directions to a destination transmitted by a mobile position identification unit. A remote entry navigation system includes a receiver that receives location data representing a desired location from a remote mobile position identification unit. An in-vehicle memory retains the location data. A vehicle processor generates routing directions to the desired location based on at least two elements included within the location data.

Other systems, methods, features, and advantages will be, or will become, apparent to one with skill in the art upon examination of the following figures and detailed description. It is intended that all such additional systems, methods, features and advantages be included within this description, be within the scope of the invention, and be protected by the following claims.

### BRIEF DESCRIPTION OF THE DRAWINGS

The system may be better understood with reference to the following drawings and description. The components in the figures are not necessarily to scale, emphasis instead being placed upon illustrating the principles of the invention. Moreover, in the figures, like referenced numerals designate corresponding parts throughout the different views.

Figure 1 is a block diagram of a remote entry navigation system.

Figure 2 is a partial diagram of a remote entry navigation system.

Figure 3 is a block diagram of a mobile position identification unit.

Figure 4 is a block diagram of a navigation device.

Figure 5 is a remote entry navigation system within a vehicle.

Figure 6 is an alternate diagram of a mobile position identification unit.

Figure 7 is a flow diagram of a method of operating a remote entry navigation system.

Figure 8 is a pictorial diagram of a method of operating a remote entry navigation system.

### DETAILED DESCRIPTION OF THE PREFERRED EMBODIMENTS

A remote entry navigation system streamlines a navigation process by generating routing directions to a destination transmitted by a mobile position identification unit. The system may enhance the navigation process by receiving location data from a remote device. The remote device identifies destinations located near the device. Destinations may be transmitted to navigation device through a wireless tangible medium. The system may process the location data corresponding to a destination and generate directions to the destination in real-time, near real-time, or after a delay. In some systems, the location data may include an image embedded with or linked to location data. In these systems, the image may be displayed by a navigation device while in route or upon arrival at the destination.

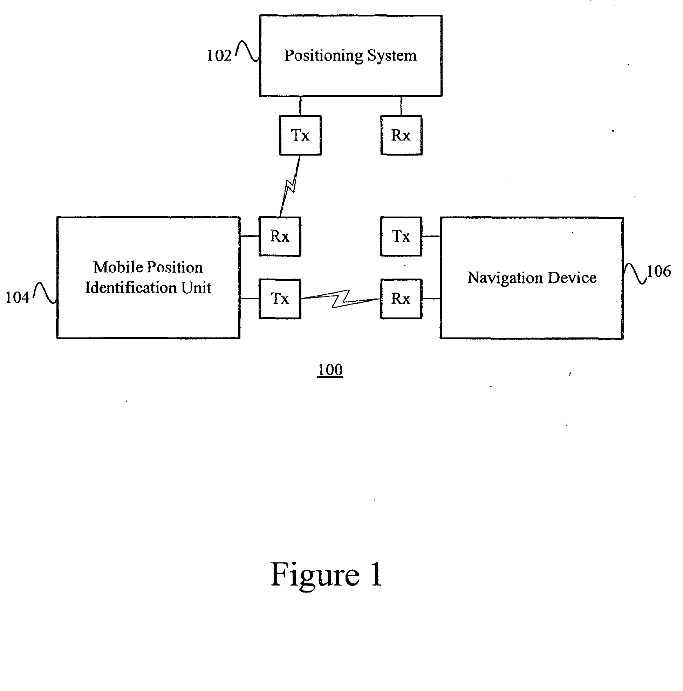

Figure 1 is a block diagram of a remote entry navigation system 100. The system includes a positioning system 102, a mobile position identification unit 104, and a navigation device 106. The positioning system 102 may transmit position reference data to a mobile position identification unit 104. The position reference data may be transmitted continuously or automatically at predetermined intervals. In some systems, the position reference data may be transmitted without receiving a request from the mobile position identification unit 104. The mobile position identification unit 104 may receive the transmitted position reference data through a receiver 108 and may retain some or all of the position reference data in a local or distributed external memory.

The mobile position identification unit 104 may generate a data structure that includes location data. In some applications, the location data may include some or all of the position reference data received from the positioning system 102. In other applications, the mobile position identification unit 104 may use some or all of the position reference data to generate geographical coordinate data that may be included in the location data. The geographical coordinate data may be generated in real time, near real time, or after a delay, and may correspond to an approximate location of the mobile position identification unit 104 when the position reference data was received. The data structure generated by the mobile position identification unit 104 may be encrypted, use digital signatures, or may be processed or supplemented with other security measures to protect the integrity of the data.

The mobile position identification unit 104 may transmit an electronic signal containing the data structure to a navigation device 106. To enable communication with different navigation devices 106, a navigation device 106 may have a unique numerical, alpha-numerical, or other indicia of identification that may allow communication with the mobile position identification unit 104. In some applications, the mobile position identification unit 104 may use this unique identifier to directly communicate with the navigation device 106 through different communication technologies. These communication technologies may include Radio Frequency ("RF"), Cellular Digital Packet Data ("CDPD"), Code Division Multiple Access ("CDMA"), Global System for Mobile communication ("GSM"), Short Message Service ("SMS"), Multimedia Message Service ("MMS"), and/or Satellite links. Alternatively, the mobile position identification unit 104 may use these or other communication technologies to directly interface an intermediate device that forwards the unique identifier of a navigation device 106 and the data structure across a network to a device that communicates with the navigation device 106. If the navigation device 106 is not activated or out of range, the intermediate device may store the data for delivery at a future opportunity or may cause it to be stored in an external device for future delivery.

The navigation device 106 may receive the transmitted electronic signal at a receiver 118. The receiver 118 may convert the electronic signal into a data structure and some or all of the data structure may be stored in a local or distributed external memory. Decryption measures may be used at the navigation device 106 to decode encrypted data structures. The navigation device 106 may process the data structure and identify the location data. If the location data includes the position reference data, the navigation device 106 may process this information and generate geographical coordinate data. Once the geographical data is obtained, or if it was included in the transmitted data structure, the navigation device 106 may process the geographical coordinate data. The navigation device 106 may use the geographical coordinate data to generate routing directions from a current location of the navigation device 106 to the destination identified by the geographical coordinate data. After generating the routing directions, an interface may deliver the routing directions to a user of the navigation device 106. In some applications, the routing directions may be automatically generated upon receipt of the geographical coordinate data (e.g., no additional input may be required from a user of the navigation device 106). In other applications, a user may request the routing directions. A user request may be received near the time that the transmitted signal is received at the navigation device 106, or after some delay.

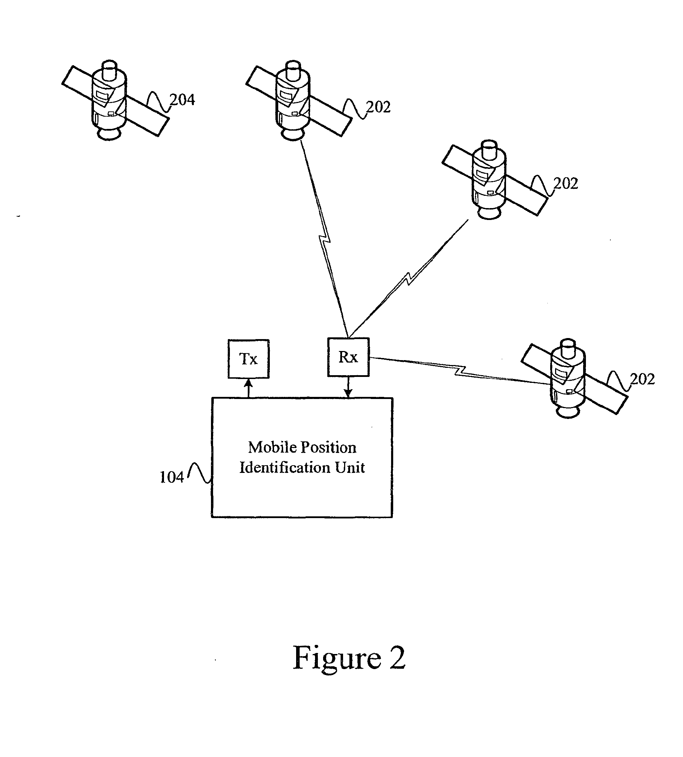

Figure 2 is a second diagram of the remote entry navigation system 100. In figure 2, the positioning system 102 includes a series of global positioning system ("GPS") satellites 202 that push the position reference data to the mobile position identification unit 104. The position reference data may include low power radio signals transmitted on one or more frequencies. The position reference data may include one or more clock signals, orbital information, system status messages, delay models, and/or a unique pseudorandom synchronization signal that enables the mobile position identification unit 104 to identify the transmitted data. In figure 2, three GPS satellites 202 are in communication with the mobile position identification unit 104. The mobile position identification unit 104 may process these signals by executing applications that generate geographical coordinate data identifying a unit's approximate location. The geographical coordinate data may include latitudinal data and longitudinal data. In some applications, the geographical coordinate data may be generated by using the signals transmitted by the GPS satellites 202 to triangulate the location of the mobile position identification unit 104.

To increase the accuracy of the geographical coordinate data, the mobile position identification unit 104 may communicate with additional GPS satellites 204. In some applications, a mobile position identification unit 104 may monitor and/or communicate with between twelve and twenty different GPS satellites. Communication with additional GPS satellites 204 may enable the mobile position identification unit 104 and/or the navigation device 106 to generate geographical coordinate data, such as altitude data and/or bearing direction data. The mobile position identification unit 104 may also increase the accuracy of the geographical coordinate data by determining a GPS positioning system correction factor. In some mobile identification units 104, the correction factor is based on a difference between a local clock signal and a received clock signal. A mobile identification unit 104 may apply the correction factor when processing the position reference data to remove transmission and/or environmental errors. Alternatively, a mobile identification unit 104 may transmit the correction factor to a navigation device 106 that accounts for errors during its processing of received data. In other systems, the positioning system 102 may include other sensors that transmit location data to the mobile position identification unit 104. These other sensors may include a network capable of performing triangulation through the use of mobile or fixed distributed communication devices, or other position location hardware and/or software.

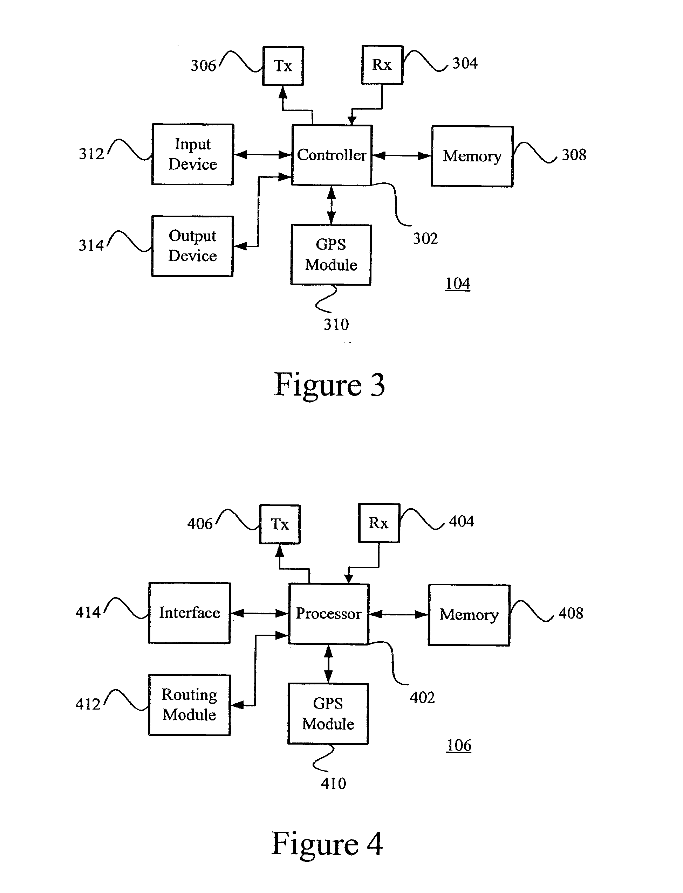

Figure 3 is a block diagram of a mobile position identification unit 104. The mobile position identification unit 104 includes a controller 302 that executes applications that receive and transmit, store, and process data. Position reference data is received at the receiver 304, and may be processed in real or near real time. The receiver 304 may convert the received position reference data into electrical signals that vary over time, or into digital data. Some mobile position identification units 104 may store some or all of the received data in a volatile or non-volatile memory 308. The GPS module 310 may include hardware and/or software that processes this received position reference data and determines approximate geographical coordinate data for the mobile position identification unit 104. In some applications, the GPS module 310 may identify and use GPS satellite clock signals and orbital information included in the position reference data to identify the approximate geographical coordinates of the mobile position identification unit 104. In other applications, a corrective factor may be applied to the position reference data to increase the accuracy of a mobile identification unit's 104 approximate geographical coordinates. The geographical coordinate data may be stored in a memory 308. In some applications, the memory 308 may retain an organized electronic listing of geographical destinations, addresses, place name, intersection, and/or place type which may be cross referenced with the geographical coordinate data.

The input 312 and output 314 devices facilitate user interaction with the mobile position identification unit 104. The input device 312 may allow a user to control different functions of the unit, and/or initiate the transmission of data to a navigation device 106. The input device 312 may include pushbutton switches, selection keys, and/or touchscreen areas on a touchscreen. The output device 314 may include a display device and/or an audio device. The controller 302 generates audio and/or visual signals that may be delivered through the output device 314. These audio and/or visual signals may be used to convey the geographical coordinate data to the user. Some mobile position identification units 104 include a transceiver instead of the separate transmitter and receiver of figure 3. Some other mobile position identification units 104 receive input and generate outputs through a display device. Other mobile position identification units 104 may include an external interface to communicate with external devices. These devices may include and a remote memory, GPS module, and/or other processing units or processors.

When data is transmitted to a navigation device 106, the controller 302 may format the position reference data, geographical coordinate data, and/or cross referenced destination data into a data structure that may be modulated by the transmitter 306 across a communication medium. A listing of formats compatible with navigation devices 106 may be retained in a memory 308. The controller 302 may be designed to select a predetermined format for use with a particular navigation device 106. Alternatively, the controller 302 may select a format based on available communication bandwidth, transmission speed, supported security features, or other user or manufacturer selectable parameters.

Figure 4 is a block diagram of a navigation device 106. The navigation device 106 includes a processor 402 that executes applications that receive and transmit, store, and process data. The receiver 404 receives modulated signals from a mobile position identification unit 104, and converts the received signal into a data structure. Some or all of the data structure may be organized and/or stored in a volatile or non-volatile memory 408. The navigation device processor 402 may process this data structure to identify the location data.

Some navigation devices 106 determine a current location and use this information to generate directions to the identified destination. A GPS module 410 may include hardware and/or software that automatically determines an approximate location of the navigation device 106. Alternatively, a user may enter a current location through an interface 414. The interface 414 may recognize voice commands, or may include a touchscreen, keyboard, or other periphery device that allows entry of a current location of the navigation device 106. The entry of the navigation system's current location may include coordinate data, address data, and/or identifying name data. A routing module 412 may use the current location of the navigation device 106 and the location data supplied by the mobile position identification unit 104 to generate routing directions. The routing directions may guide a user of the navigation device 106 to the destination associated with the location data.

In some applications, the routing module 412 may automatically generate routing directions upon receipt of the remotely transmitted location data. In other applications, the routing module 412 may require a user response before generating the routing directions. This user input may identify location data corresponding to a destination that was wirelessly transmitted to the navigation device 106 and stored in a local or remote memory 408.

The routing module 412 may include an in-vehicle or external distributed map database that stores nationwide, citywide, or municipal road and points of interest data. Points of interest data may include minor streets or thoroughfares, lakes, rivers, railroads, coastlines, airport locations, gas stations, police stations, and/or other significant landmarks that may be of interest to or aid a user in navigating through a particular area.

In some applications, the navigation device 106 may present a user with a map illustrating the routing directions. The map display may be customizable by an end-user. Some navigation devices 106 allow users to display a map in three dimensions through interface 414, a heads-up display, or by patterns produced on a photosensitive medium exposed by holography.

The navigation device 106 may include a transmitter 406 that automatically or at predetermined intervals transmits a signal through a communication medium to a management system. The management system may maintain a location of the navigation device 106 with respect to a distributed network of communication devices. This location information may be used to narrow down a transmission area when a mobile identification unit 104 is communicating with a navigation device 106.

Some navigation devices 106 include an external interface to communicate with external devices. These devices may include remote memory, GPS modules, routing modules, map databases, and/or other processing units or processors.

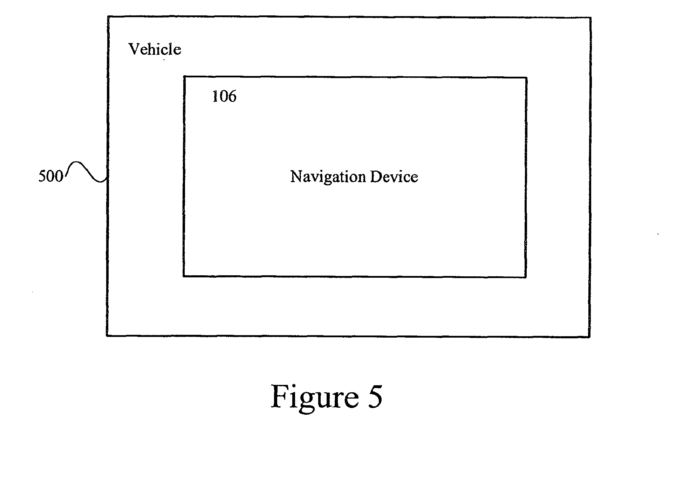

While some navigation devices 106 are self contained devices, many devices are adaptable to other technologies. Some navigation devices 106 are part of devices that transport persons and/or things, such as the vehicle 500 of figure 5. When installed within a vehicle 500, the navigation device 106 may communicate with an on-board computer, an electronic control unit, an electronic control module, or a body control module. In other applications, the navigation device 106 may be an aftermarket device that communicates with vehicle 500 using one or more protocols. Some of the protocols may include J1850VPW, J1850PWM, ISO, ISO91410102, ISO14230, CAN, High Speed CAN, MOST, LIN, IDB-1394, IDB-C, D2B, Bluetooth, or FlexRay.

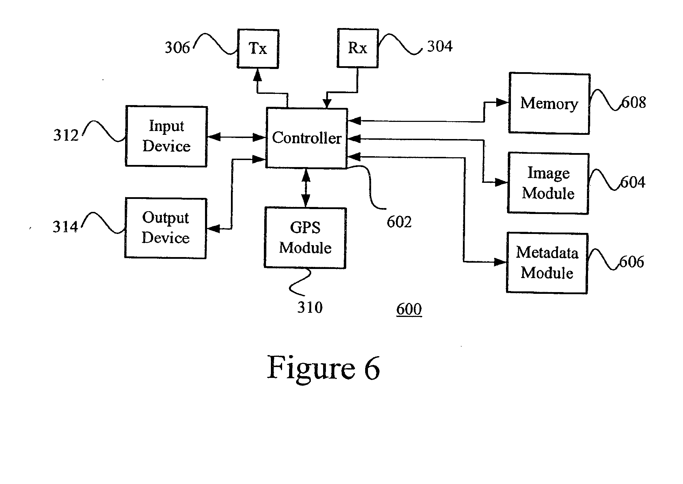

Figure 6 is an alternate mobile position identification unit, such as a mobile communication device 600. The mobile communication device 600 allows a user to capture images of a desired location which may be linked or embedded with/in location data transmitted to a navigation device 106. An image module 604 may include an electronic photosensitive sensor that captures an image. The image module 604 may frame, focus, and preview the image. In some applications, the image module 604 may also measure and/or adjust light intensity, adjust color intensity, and capture the image. Some mobile communication devices 600 may capture the image digitally or through light exposure to a tangible recording medium. Digitally captured images may be stored in an image file retained within a volatile or non-volatile memory 608. These image file formats may include JPEG, GIF, TIFF, or other image file formats. In some applications, portions of the memory 608 may be a unitary part of the mobile communication device 600. In other applications, portions of the memory 608 may be removable.

A metadata module 606 may process a digital image, captured by the image module 604, and the location data. The location data may be generated by the GPS module 310 in response to received position reference data, may be manually entered, and/or may be generated by scene recognition software resident to the image module 604 or the controller 602. The metadata module 606 links a captured image with location data associated with the image. In some applications, the location data is embedded into a header portion of the digital image file. Alternatively, the metadata module 606 may append location data tags to the digital image file. The metadata module 606 may also link date and time information, settings used to capture the image, and/or other data to the image file.

A digital image that is linked to its associated location data may be stored in memory 608 or transmitted to a navigation device 106. When transmitting a linked image, the user may be prompted by the mobile communication device 600, or by an external device, to enter a unique navigation system identifier and/or to select a linked image to be transmitted. The user may enter this information through a voice command, or may actuate one or more buttons or selection devices that are part of the input device 312. The mobile communication device 600 may transmit an electronic signal containing the linked image data to the selected navigation device(s) 106 across a wireless or tangible medium.

A navigation device 106 receives the electronic signal transmitted by the mobile communication device 600 and converts the electronic signal into a data structure. A navigation device processor 602 processes this data structure to identify and extracts the location data from the digital image file. A routing module 412 may use the location data to generate a route from the current location of the navigation system to the location associated with the location data. The navigation device processor 402 may determine the type of output device(s) that are part of or in communication with the navigation device 106. If the navigation device 106 includes an audio output device, audio routing directions may be output. If the navigation device 106 includes a display device, a map may be output. The map may be a graphical map. The graphical map may display the routing directions on the map. In some applications, a route illustrating the routing directions is highlighted to distinguish it from other portions of the map.

In some systems, the received digital image may be displayed to the user through a display device. The digital image may be displayed prior to or after displaying the routing directions, while in route to the desired location, or upon arrival at the desired location. In some applications, a miniature version of the digital image may be positioned near an edge of the displayed map. An enlarged version of this thumbnail image may be loaded by selecting it through selector buttons, a touchscreen, or a relative and/or absolute pointing device.

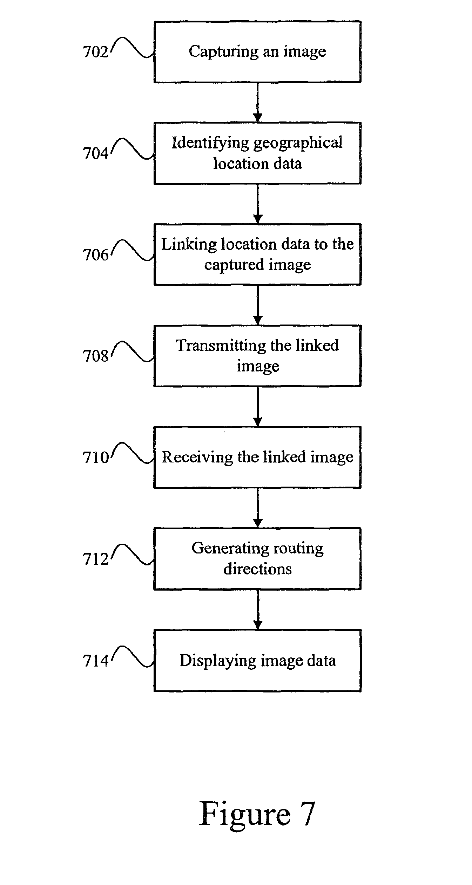

Figure 7 is a flow diagram of a method of operating a remote entry navigation system. At act 702 an image of a desired location is captured and stored in an image file. The image may be captured using a mobile communication device, such as a digital camera, mobile phone that includes a digital camera, a personal digital assistant, or other personal communication device equipped with or in communication with a positioning system. At act 704 geographical coordinate data associated with the captured image is identified. The mobile communication device may generate the geographical coordinate data based on position data received from a positioning system, such as a GPS system. Alternatively, the geographical coordinate data may be entered through an interface or supplied by an external device in communication with the mobile communication device.

At act 706, the geographical coordinate data associated with the captured image is linked with or embedded in the image file. The linked image file is transmitted at act 708. The transmission may occur in real time, near real time, or after some delay of capturing the image and linking the geographical coordinate data to the captured image.

At act 710 a navigation device receives the linked image and identifies the image data and the location data. At act 712 the location data may be supplied to a routing module that generates routing directions from a current location of the navigation device to the destination captured in the image. At act 714 the image data may be displayed to a user through a display device. The image may be displayed before, during, or after a graphical representation of the routing directions are displayed. In some applications, a miniature version of the image may be displayed on the display device.

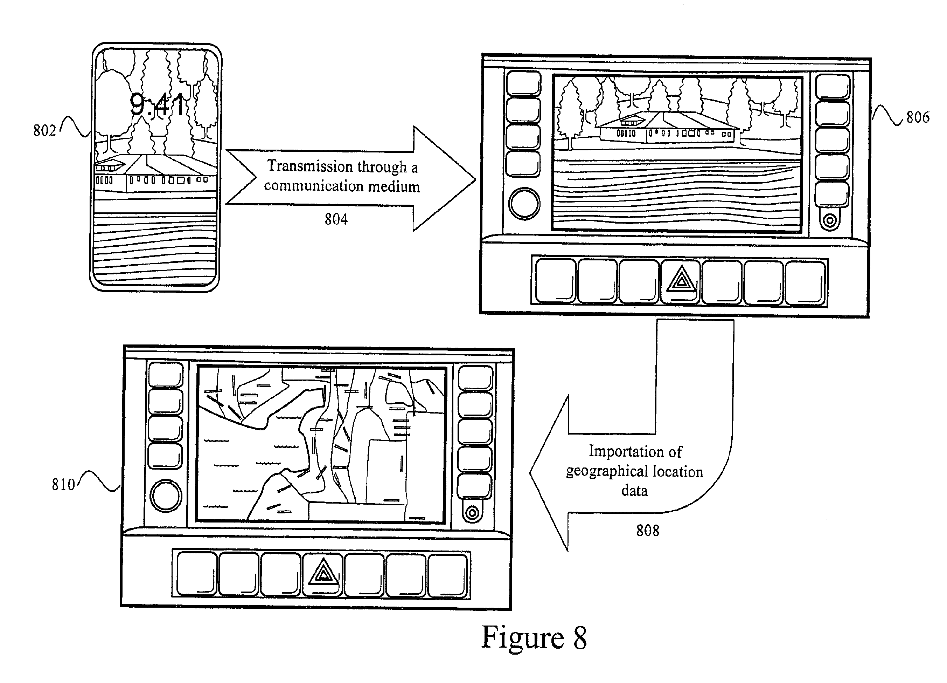

Figure 8 is a pictorial diagram of a method of operating a remote entry navigation system. At act 802 an image is captured by a mobile phone camera and embedded with geographical location data. The linked image is transmitted from the mobile phone to an in-vehicle navigation device through a communication medium at act 804. The in-vehicle navigation device receives the linked image and identifies the image data and the location data. The image data is displayed on a display device at act 806. The in-vehicle navigation device imports the location data at act 808, and uses this location data to generate a route to the location where the image was captured. At act 810 the routing directions are displayed in the form of a graphical map.

Each of the processes described may be encoded in a computer readable medium such as a memory, programmed within a device such as one or more integrated circuits, one or more processors or may be processed by a controller or a computer. If the processes are performed by software, the software may reside in a memory resident to or interfaced to a storage device, a communication interface, or non-volatile or volatile memory in communication with a transmitter. The memory may include an ordered listing of executable instructions for implementing logic. Logic or any system element described may be implemented through optic circuitry, digital circuitry, through source code, through analog circuitry, or through an analog source, such as through an electrical, audio, or video signal. The software may be embodied in any computer-readable or signal-bearing medium, for use by, or in connection with an instruction executable system, apparatus, or device. Such a system may include a computer-based system, a processor-containing system, or another system that may selectively fetch instructions from an instruction executable system, apparatus, or device that may also execute instructions.

A "computer-readable medium," "machine-readable medium," "propagated-signal" medium, and/or "signal-bearing medium" may comprise any device that contains, stores, communicates, propagates, or transports software for use by or in connection with an instruction executable system, apparatus, or device. The machine-readable medium may selectively be, but not limited to, an electronic, magnetic, optical, electromagnetic, infrared, or semiconductor system, apparatus, device, or propagation medium. A non-exhaustive list of examples of a machine-readable medium would include: an electrical connection having one or more wires, a portable magnetic or optical disk, a volatile memory such as a Random Access Memory "RAM" (electronic), a Read-Only Memory "ROM" (electronic), an Erasable Programmable Read-Only Memory (EPROM or Flash memory) (electronic), or an optical fiber (optical). A machine-readable medium may also include a tangible medium upon which software is printed, as the software may be electronically stored as an image or in another format (e.g., through an optical scan), then compiled, and/or interpreted or otherwise processed. The processed medium may then be stored in a computer and/or machine memory.

Although selected aspects, features, or components of the implementations are described as being stored in memories, all or part of the systems, including processes and/or instructions for performing processes, consistent with the system may be stored on, distributed across, or read from other machine-readable media, for example, secondary storage devices such as hard disks, floppy disks, and CD-ROMs; a signal received from a network; or other forms of ROM or RAM resident to a processor or a controller.

Specific components of a system may include additional or different components. A controller may be implemented as a microprocessor, microcontroller, application specific integrated circuit (ASIC), discrete logic, or a combination of other types of circuits or logic. Similarly, memories may be DRAM, SRAM, Flash, or other types of memory. Parameters (e.g., conditions), databases, and other data structures may be separately stored and managed, may be incorporated into a single memory or database, or may be logically and physically organized in many different ways. Programs and instruction sets may be parts of a single program, separate programs, or distributed across several memories and processors.

While various embodiments of the invention have been described, it will be apparent to those of ordinary skill in the art that many more embodiments and implementations are possible within the scope of the invention. Accordingly, the invention is not to be restricted except in light of the attached claims and their equivalents.
The following numbered clauses provide further examples:
1. A system that generates directions to a desired location based on location data received from a remote mobile position identification service, comprising:
   a receiver that converts an analog signal into a data structure that includes remote location data representing a desired location;
   an in-vehicle database in communication with the receiver that retains the data structure; and
   a vehicle processor that generates routing directions to the desired location based on at least two elements included within the data structure.
2. The system of clause 1, where the location data comprise latitudinal and longitudinal data.
3. The system of clause 1, where the location data comprises Global Positioning Satellite signal data.
4. The system of clause 1, further comprising an interface that outputs the routing directions.
5. The system of clause 4, where the interface comprises an audio device.
6. The system of clause 4, where the interface comprises a display device.
7. The system of clause 6, where the display device overlays the routing directions on a graphical map.
8. A system that generates directions to a desired location based on an image, comprising:
   a receiver that converts an analog signal into a data structure that includes image data and location data;
   an in-vehicle database in communication with the receiver that retains the data structure; and
   a routing module that generates directions to a location of the image based on the data structure without processing a user selection or input.
9. The system of clause 8, where the location data comprises bearing data.
10. The system of clause 8, where the location data comprises latitudinal data and longitudinal data.
11. The system of clause 10, further comprising a display device that displays an image associated with the image data.
12. The system of clause 11, where the display device displays a miniature version of the image.
13. The system of clause 12, where the display device graphically displays the routing directions.
14. In a computer implemented method that facilitates navigation to a location through an image, comprising:
   receiving a non-user specific data structure that links an image to a location;
   identifying a location of the image using at least two data elements within the data structure; and
   generating directions to the location based on the data structure,
   where the method enables vehicle navigation to a location of the image without the need to select or enter a destination.
15. The method of clause 14, where the data structure comprise longitudinal data and latitudinal data.
16. The method of clause 14, further comprising delivering the route directions to a user.
17. The method of clause 16, where the act of delivering the routing directions to the user comprises displaying the routing directions on a display device.
18. The method of clause 17, further comprising displaying the image on the display device.
19. The method of clause 18, where the image is displayed in a miniature version.
20. The method of clause 14, where the data structure is received from a mobile phone.
21. The method of clause 20, where the mobile phone further comprise a digital camera.
22. The method of clause 14, where the data structure is received from a GPS enabled digital camera.

## Claims

1. A method of navigating to a destination location comprising:
receiving an image of a destination location and associated destination location information at a navigation system;
identifying a current location of the navigation system;
extracting the destination location information of the destination location from the received image and associated destination location information;
determining, at the navigation system, a route to the destination location from the current location; and
displaying the received image, on a display coupled to the navigation system, when the navigation system arrives at the destination location,
where the received image of the destination location comprises an image of the destination location captured using a mobile position identification unit, and where the mobile position identification unit is used to identify location information for the destination location and associate the location information with the image.

2. The method of claim 1, where the mobile position identification system is a mobile phone.

3. The method of claim 1, where the navigation system is an in-vehicle navigation system.

4. The method of claim 1, where the navigation system is a portable navigation system.

5. The method of claim 1, where determining the route to the destination location is responsive to a user request.

6. The method of claim 1, further comprising displaying the received image, on the display coupled to the navigation system, before or during navigation to the destination location.

7. The method of claim 1, where transmitting the image and associated location information to the navigation system comprises transmission over a wireless communication medium.

8. A system for navigating to a destination location comprising:
a navigation system configured to receive an image of a destination location and associated destination location information;
the navigation system further comprising a processor configured to
identify a current location of the navigation system;
extract the destination location information of the destination location from the received image of the destination and associated destination location information;
determine a route to the destination location from the current location of the navigation system; and
display the received image of the destination location, on a display coupled to the navigation system, when the navigation system arrives at the destination location,.
where the received image of the destination location is captured using a mobile position identification unit, and where the mobile position identification unit is used to identify location information for the destination location and associate the location information with the image.

9. The system of claim 8, where the mobile position identification system is a mobile phone.

10. The system of claim 8, where the navigation system is an in-vehicle navigation system.

11. The system of claim 8, where the navigation system is a portable navigation system.

12. The system of claim 8, where the navigation system determines the route to the destination location responsive to a user request.

13. The system of claim 8, where the navigation system further displays the received image, on the display coupled to the navigation system, before or during navigation to the destination location.

14. The system of claim 8, where the mobile position identification unit further transmits the image and associated location information to a navigation system over a wireless communication medium.
